(19)

**Europäisches Patentamt**

**European Patent Office**

**Office européen des brevets**

(11) **EP 4 125 028 B1**

(12) **EUROPEAN PATENT SPECIFICATION**

(45) Date of publication and mention
of the grant of the patent:
**13.11.2024  Bulletin 2024/46**

(21) Application number: **22181584.8**

(22) Date of filing: **28.06.2022**

(51) International Patent Classification (IPC):
**G06Q 10/063** (2023.01)     **G06Q 30/0201** (2023.01)
**G06Q 50/06** (2024.01)     **G06Q 50/40** (2024.01)

(52) Cooperative Patent Classification (CPC):
**G06Q 50/40; G06Q 10/063; G06Q 30/0206;
G06Q 50/06;** Y02T 10/70; Y02T 10/7072;
Y02T 90/12

(54) **METHOD AND SYSTEM TO GENERATE PRICING FOR CHARGING ELECTRIC VEHICLES**

VERFAHREN UND SYSTEM ZUR ERZEUGUNG VON PREISEN ZUM LADEN VON ELEKTRISCHEN FAHRZEUGEN

PROCÉDÉ ET SYSTÈME POUR GÉNÉRER DES PRIX POUR LA CHARGE DE VÉHICULES ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2021  IN 202121033775**

(43) Date of publication of application:
**01.02.2023  Bulletin 2023/05**

(73) Proprietor: **Tata Consultancy Services Limited
Maharashtra (IN)**

(72) Inventors:
 • **MISRA, Prasant Kumar
  560066 Bangalore, Karnataka (IN)**
 • **NARAYANAN, Ajay
  560066 Bangalore, Karnataka (IN)**
 • **GURUVAYUR SASIKUMAR, Aakash Krishna
  600113 Chennai, Tamil Nadu (IN)**
 • **VASAN, Arunchandar
  600113 Chennai, Tamil Nadu (IN)**
 • **SARANGAN, Venkatesh
  600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
**KR-A- 20190 133 567**

• **DIMITROV STOYAN ET AL: "Reinforcement Learning Based Algorithm for the Maximization of EV Charging Station Revenue", 2014 INTERNATIONAL CONFERENCE ON MATHEMATICS AND COMPUTERS IN SCIENCES AND IN INDUSTRY, IEEE, 13 September 2014 (2014-09-13), pages 235 - 239, XP032738356, DOI: 10.1109/MCSI.2014.54**
• **ABDULLAH HEBA M ET AL: "Reinforcement Learning Based EV Charging Management Systems-A Review", IEEE ACCESS, IEEE, USA, vol. 9, 8 March 2021 (2021-03-08), pages 41506 - 41531, XP011844679, DOI: 10.1109/ACCESS.2021.3064354**

**Description**

**CROSS-REFERENCE TO RELATED APPLICATIONS AND PRIORITY**

The present application claims priority from Indian patent application no. 202121033775, filed on July 27, 2021.

TECHNICAL FIELD

The disclosure herein generally relates to electric vehicles, and, more particularly, to method and system to generate pricing for charging electric vehicles.

BACKGROUND

Electric vehicle charging stations connect electric vehicles (e.g., electric battery powered vehicles, plug in hybrid electric vehicles, etc.) to the electric power supply network for the purpose of charging batteries (or other electrical storage devices) of electric vehicles (EV). Multi-unit residential building (MURB) residents are the upcoming segment of electric vehicle owners and potential buyers in several countries. Such MURB residents mostly rely on public chargers, which currently handle only 5% of the EV charging needs. Early adopters of EV typically had private charging infrastructure and with increase in EV owners residing in MURB access to public EV supply equipment (EVSE) which is fast becoming important. However, access to charging through EVSE is the most essential condition for EV adoption in wide network. Most importantly, EVSE deployment has a feedback bootstrapping dependency with EV adoption and either may lead or lag the other. To sustain a virtuous cycle in the joint adoption of EVs and EVSEs, efficient management of existing public EVSE is critically important. With EVs becoming more mainstream, public chargers may not be able to match such operations scaled without extensive deployments. Also, this may not only lead to a demand-supply mismatch in the short-term but impacts the growth of EV adoption in long term. For managing such demand supply mismatch, dynamic pricing is a widely used control tool, but often lacks in making informed pricing decisions to maximize aggregator revenue for business growth.

Most of the conventional systems need efficiency in EVSE particularly during peak demand and even with the presence of fast charging, a single user typically takes around 30 minutes for one charging session and so, the EVSE can typically serve only 16 EVs during normal working hours. From a user's perspective, an ideal experience would be zero wait availability of public charging at a reasonable cost. From the EVSE operator's perspective, there would be high utilization of the infrastructure that maximizes revenue and margin. To maximize the overall system utility from both these user and system perspectives, a demand management (DM) approach in dynamic or surge pricing for EV charging is essentially required. In general, surge pricing can either reduce the demand (demand-response) to meet the supply; or augment the supply to meet the demand; or both. Most of the conventional techniques have considered pricing for EV charging to varying degrees of abstraction and assumptions/knowledge/models about both EV users (e.g., state of charge or SoC) and operators (e.g., availability). DIMITROV STOYAN ET AL: "Reinforcement Learning Based Algorithm for the Maximization of EV Charging Station Revenue" presents an online reinforcement learning based application which increases the revenue of one particular electric vehicles (EV) station, connected to a renewable source of energy. Moreover, the proposed application adapts to changes in the trends of the station's average number of customers and their types. Most of the parameters in the model are simulated stochastically and the algorithm used is a Q-learning algorithm. A computer simulation was implemented which demonstrates and confirms the utility of the model (Abstract). KR20190133567 (A) discloses according to one embodiment of the present invention, provided is a charging system, which comprises: a learning control module obtaining a status parameter regarding a charging station environment, updating a compensation value based on the obtained status parameter, and determining a service area based on the updated compensation value; and a communication system broadcasting service information based on the determined service area (Abstract). ABDULLAH HEBA M ETAL: "Reinforcement Learning Based EV Charging Management Systems-A Review" To mitigate global warming and energy shortage, integration of renewable energy generation sources, energy storage systems, and plug-in electric vehicles (PEVs) have been introduced in recent years. The application of electric vehicles (EV) in the smart grid has shown a significant option to reduce carbon emission. However, due to the limited battery capacity, managing the charging and discharging process of EV as a distributed power supply is a challenging task. Moreover, the unpredictable nature of renewable energy generation, uncertainties of plug-in electric vehicles associated parameters, energy prices, and the time-varying load create new challenges for the researchers and industries to maintain a stable operation of the power system. The EV battery charging management system plays a main role in coordinating the charging and discharging mechanism to efficiently realize a secure, efficient, and reliable power system. More recently, there has been an increasing interest in data-driven approaches in EV charging modeling. Consequently, researchers are looking to deploy model-free approaches for solving the EV charging management with uncertainties. Among many existing model-free approaches, Reinforcement Learning (RL) has been widely used for EV charging management. Unlike other machine learning approaches, the RL technique is based on maximizing the cumulative reward. This article reviews the existing literature related to the RL-based framework, objectives, and architecture for the charging coordination strategies of electric vehicles in the power systems. In addition, the review paper presents a detailed comparative analysis of the techniques used for achieving different charging coordination objectives while satisfying multiple constraints. This article also focuses on the application of RL in EV coordination for research and development of the cutting edge optimized energy management system (EMS), which are applicable for EV charging (Abstract).

SUMMARY

Embodiments of the present disclosure present technological improvements as solutions to one or more of the above-mentioned technical problems recognized by the inventors in conventional systems. For example, in one embodiment, a system for generating pricing for charging electric vehicles is set out in the appended claim 7

In another aspect, a method for generating pricing for charging electric vehicles is provided in set out in the appended claim 1.

In yet another aspect, a non-transitory computer readable medium provides one or more non-transitory machine-readable information storage mediums comprising one or more instructions, which when executed by one or more hardware processors perform actions includes an I/O interface and a memory coupled to the processor is capable of executing programmed instructions stored in the processor in the memory to receiving by an electric vehicle (EV) charging aggregator having an RL agent, a user request comprising an EV charging demand request and a time of day to generate an EV charging price to maximize revenue of the EV charging aggregator is set out in the appended claim 11. Further, model using a state generator, a state of the RL agent for processing the user request and assigning a reward to the RL agent for the performed action. Then, dynamically generating by the RL agent, the EV charging price for the user request to maximize revenue of the EV charging aggregator by, computing (i) an actual demand pool ($P_1$) based on a next time step of actual demand pool size ( $N_{t+1}^{P_1}$ ), (ii) a service pool (S) based on a next time step of service pool size ( $N_t^S$ ), (iii) a total number of currently available EV chargers ($K_t$), and (iv) a time of day ($t_d$) of the user request.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system (alternatively referred as EV charging management system), in accordance with some embodiments of the present disclosure.

FIG.2A illustrates a public EV supply equipment for the demand EV profiles in discrete time steps using the system of FIG. 1, in accordance with some embodiments of the present disclosure.

FIG. 2B illustrates a functional architecture to generate pricing for charging EV using the system of FIG. 1, in accordance with some embodiments of the present disclosure.

FIG. 3 illustrates a flow diagram illustrating the method for maximizing EV aggregator revenue by generating pricing for EV charging using the system of FIG. 1, in accordance with some embodiments of the present disclosure.

FIG.4A and FIG.4B illustrates a behavior model of EV users and private EVSE suppliers using the system of FIG.1, in accordance with some embodiments of the present disclosure.

FIG.4C and FIG.4D illustrates graphical representation of system load vs predicted price maximizing EV aggregator revenue using the system of FIG. 1, in accordance with some embodiments of the present disclosure.

FIG.5A to FIG.5F illustrates performance of the RL agent with various business metrics compared during peak hours and on average for generating pricing for EV charging aggregators for maximizing revenue using the system of FIG.1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system to generate pricing for charging electric vehicles (EV). The method disclosed, enables generation of dynamic pricing policies to maximize aggregator revenue based on a stochastic model constraints and user behavioral models. The system includes an EV charging aggregator having a reinforcement learning (RL) agent which processes user request. Each user request comprises an EV charging demand request to charge EVs from electric vehicle supplier equipment (EVSE). The state of the RL agent is spatially tagged with the EV demand request and the availability of EVSE. The RL agent learns to map actions of the user request to maximize aggregator revenue for which a reward is assigned to the RL agent based on the performed action. EV charging pricing policy dynamically adapts to user behaviors at a demand side and a supply side. Realistic management of EVSE, spatio temporal variations for the user request demands to the driving patterns for accurate estimation and adapting the demand elasticity of EV charging. Based on the state space representation, the reward is assigned dynamically to the RL agent for price management. The RL agent is well trained and implemented using a Deep Q-Network (DQN). The present disclosure generates pricing dynamically appropriately to the user request maximizing the aggregator revenue for demand elasticity of the user population.

To manage the demand supply mismatch, dynamic pricing is a widely used control tool, but it is often difficult to make informed pricing decisions: (i) when there is variability (both) in demand and supply; (ii) when the user's spatiotemporal behavior and price elasticity is unknown; (iii) when charging preconditions (such as state-of-charge) are not freely available. The present disclosure utilizes the RL agent to overcome these challenges of dynamic pricing for EV charging acting as the service aggregator. The method of the present disclosure is evaluated on real-world traffic patterns for the city of example (Luxembourg) by augmenting the Luxembourg SUMO (Simulation of Urban Mobility) traffic scenario (LuST) simulator with EV charging demand models. The method matches the performance of popular price-based control approaches, without making any explicit assumptions. In the case of SoC based charging completion policy, represent the present disclosure obtains 35% more revenue than other compared baselines.

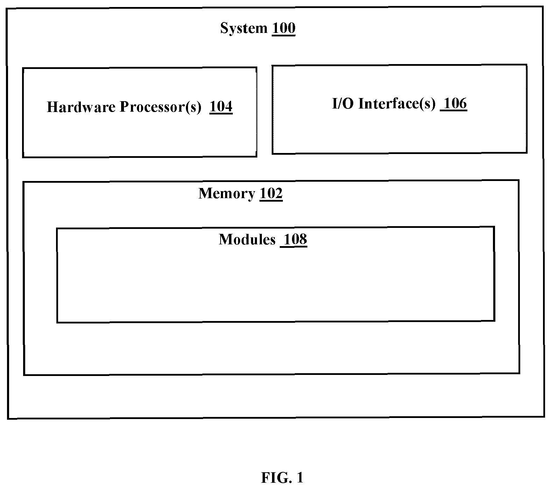

Referring now to the drawings, and more particularly to FIG. 1 through FIG. 5F, where similar reference characters denote corresponding features consistently throughout the figures, there are shown preferred embodiments and these embodiments are described in the context of the following exemplary system and/or method.

FIG. 1 illustrates an exemplary block diagram of a system (alternatively referred as EV charging management system), in accordance with some embodiments of the present disclosure. In an embodiment, the EV charging management system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100. Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, 10 hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. The modules 108 can be an Integrated Circuit (IC) (not shown), external to the memory 102, implemented using a Field-Programmable Gate Array (FPGA) or an Application-Specific Integrated Circuit (ASIC). The names (or expressions or terms) of the modules of functional block within the modules 108 referred herein, are used for explanation and are not construed to be limitation(s).

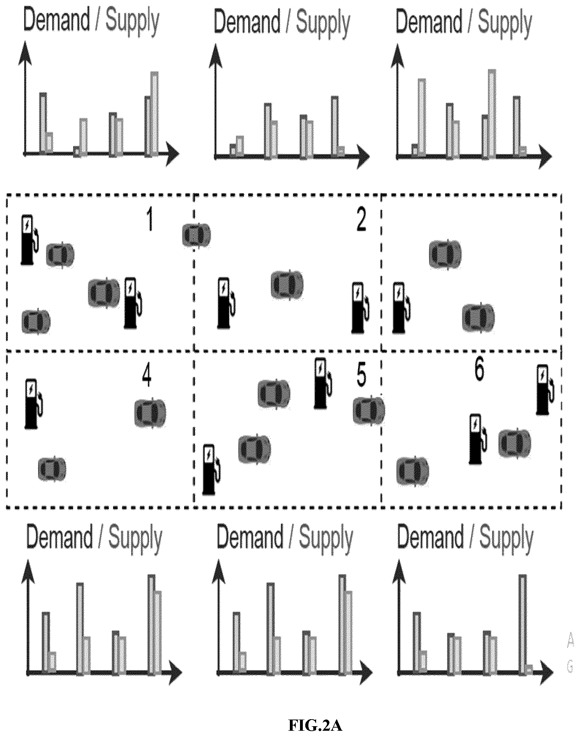

FIG.2A illustrates a public EV supply equipment for the demand EV profiles in discrete time steps using the system of FIG. 1, in accordance with some embodiments of the present disclosure. FIG.2A describes the challenge of pricing EV charging from a different perspective that drives any technology adoption in practice user behavior. EV users prefer to align their charging with convenient points in their driving patterns unless they are forced to charge immediately due to a critically low stochastic model constraints. A complementary aspect was considered in augmenting the supply-side of EVSE by incentivizing private garage owners to allow public charging. The key insight was that the behavior of private garage owners to charge at night; could be leveraged to augment supply during peak demand for EVSE charging during the day. The present disclosure dynamically generates EV charging pricing policy that can adapt to user behaviors at the demand-side and potentially the supply- side without any a priori knowledge. Pricing of EV charging for dynamic management is nontrivial for several reasons. Firstly, the demand for EV charging varies in space and time. If private garages participate in public charging, the supply-side also varies in space and time. Second, explicit, and accurate modeling of user behavior to price is challenging. Specifically, some users might prefer the nearest EVSE at any price; while others might be more sensitive to price and willing to drive around; and so on. Third, state of charge (SoC) in EVs may not be known to the EVSE operators till the start of charging. In other words, the propensity of the user to charge due to critically low SoC is not known when setting the price. Finally, the EVSE operator may also need to consider any time-of-day variations in pricing when procuring electricity in bulk from the utility company.

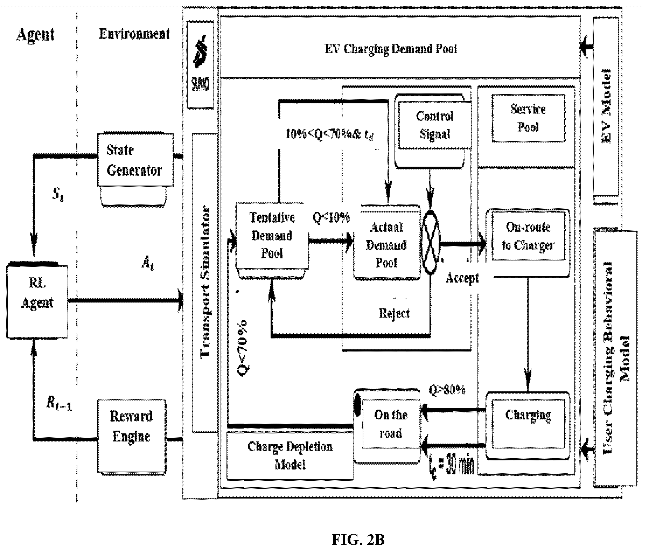

FIG. 2B illustrates a functional architecture to generate pricing for charging EV using the system of FIG. 1, in accordance with some embodiments of the present disclosure. The system includes an EV charging aggregator having an RL agent, a tentative demand pool, an actual demand pool, and a service pool. The system involves three primary stake holders comprising firstly a demand side having EV users requesting efficient charging at lowest possible price, secondly a supply side which includes a public or private EVSE operators, and thirdly an EV charging aggregator which acts as intermediator between the demand side and the supply side. The RL agent acts as an EV aggregator to a set of EVSEs spread across a city. The RL agent addresses the problem of dynamic pricing for EV charging by observing the state and decides a control action. The system implements the action and provides the reward to the RL agent. The RL agent learns to map actions to the observed state maximizes the rewards earned over the training period which complements several existing approaches that use assumptions or models about user behaviors. The action taken by the RL is to decide the price to be offered to users. Users are assigned to the nearest available EVSE separately outside the system. The reward to the RL agent would be the total revenue obtained in that timestep of the control action. The action taken by the RL agent is to decide the price to be offered to user request. Further, the reward to the RL agent would be the total revenue obtained in the timestep of the control action. Here, a low price may be accepted by many users, but the revenue would be limited by the number of EVSEs. A high price may be rejected by many users, and the revenue and utilization would substantially fall. In such scenarios, the RL agent learns to price appropriately to maximize revenue based on the demand elasticity of the user population.

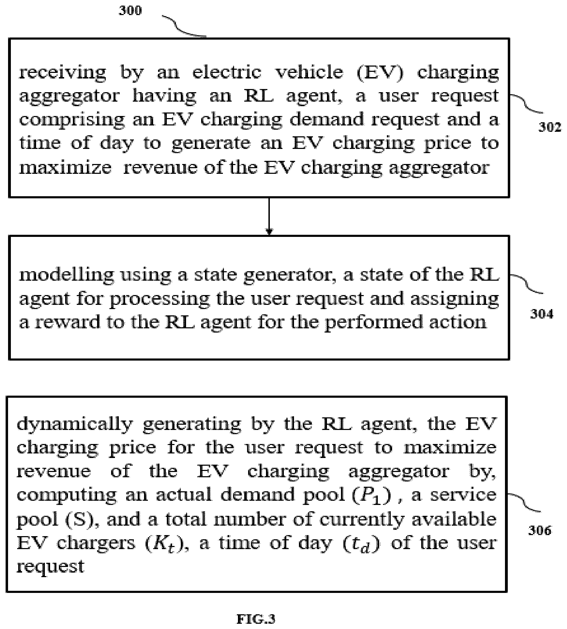

FIG. 3 illustrates a flow diagram illustrating the method for maximizing EV aggregator revenue by generating pricing for EV charging using the system of FIG. 1, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG. 1 and the steps of flow diagram as depicted in FIG.3. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 receive, via an electric vehicle (EV) charging aggregator having an RL agent, a user request comprising an EV charging demand request and a time of day to generate an EV charging price to maximize revenue of the EV charging aggregator. Considering an example, where EV users go about their daily routines make the EV charging demand request to the EV charging aggregator depending upon the time of day and the stochastic model constraints which is unknown to the RL agent. On receiving the EV charging demand request, the RL agent responds with a price. The EV users can decide either accept the offered price and proceed to charging or reject the price and try again later in the day. Again, the model for users accepting the offered model is parametrized, stochastic, and hidden from the EV charging aggregator. The EV charging demand requests would be GPS location stamped; and the EV charging aggregator obtains the current availability status of all participating EVSEs.

Referring now to the steps of the method 300, at step 304, the one or more hardware processors 104, models, by using a state generator, a state of the RL agent for processing the user request and assigning a reward to the RL agent for the performed action. Referring now to the above example, a city is considered as one large block, a single RL agent can serve the target environment based on the system load. Intuitively, to get a sense of the load on the system, the system state includes the details about the actual demand pool and the service pool. Once the user makes the request, they finish charging or decide to leave the charging process users can be tracked. Therefore, estimate of the demand pool sizes $N_X$ for the actual demand pool and the service pools can be collected. The state of the RL agent includes (i) the actual demand pool size ( $N_t^{P_1}$ ), (ii) the service pool size ( $N_t^S$ ), (iii) the total number of currently available EV chargers ($K_t$) at current time step, and (iv) the user request time of day ($t_d$). At any time t, EVs user requests fall into one of three demand queues: (1) a tentative demand pool ($P_2$), (2) an actual demand pool ($P_1$), and (3) a service pool S. The respective queue sizes evolve from $t$ to $t$+1 i.e., from the current time step to the next time step and the variable definitions are described below in Table 1,

| Table 1 - Variable Definitions | | |
|---|---|---|
| Symbol | Meaning | Type |
| **Time** | | |
| t | Time instant when decisions are made | |
| $t_d$ | Time of day | |
| [t, $t$+1] | Execution window for decisions made at $t$ | |
| [1, $T$] | Decision horizon | |
| **Supply** | | |
| $K_t$ | # Of chargers available (as supply) | $t$ |
| $\Delta K_t^{Private}$ | Change in # of private chargers | [t, $t$+1] |
| **Demand** | | |
| $P_2, P_1, S$ | Tentative demand pool, Actual pool, Service pool | |
| $N^X$ | Size of pool X | $t$ |
| $A^Q$ | Arrivals into $P_2$ from outside due to SoC Q | [$t$, $t$ + 1] |
| $A^{P1}$ | Arrivals into $P_1$ from $P_2$ due to Q and $t_d$ | [$t$, $t$ + 1] |
| $A^S$ | Arrivals into S from $P_1$ due to price acceptance | [$t$, $t$ + 1] |
| $D^R$ | Departures from $P_1$ due to price rejection | [$t$, $t$ + 1] |
| $D^S$ | Departures from S after service | [$t$, $t$ + 1] |
| **Aggregator** | | |
| $p_t$ | Price offered | $t$ |
| User | | |
| $Q_i$ | SoC of EV $i$ | $t$ |
| $p_i$ | Price at which EV $i$ charging | |
| $T_i^S$ | Session duration of EV $i$ charging | |
| $I_i$ | 1 (EV $i$ is charging) | $t$ |

The time-of-day($t_d$) as part of the system state, so that any time-of-day effects in user behavior can be learnt over time. The state of the RL agent is defined as denoted below in equation 1,

$$S_t = [N_t^{P_1}, N_t^S, K_t, t_d] \text{ ----------- equation 1}$$

The state of the RL agent makes no assumptions about the stochastic model constraints of EVs as this information is potentially available only after connecting to the EVSE.

Referring now to the steps of the method 300, at step 306, the one or more hardware processors 104, dynamically generate, via the RL agent, the EV charging price for the user request to maximize revenue of the EV charging aggregator by, computing (i) an actual demand pool ($P_1$) based on a next time step of actual demand pool size ( $N_{t+1}^{P_1}$ ), (ii) a service pool (S) based on a next time step of service pool size ( $N_t^S$ ), (iii) a total number of currently available EV chargers ($K_t$), and (iv) a time of day ($t_d$) of the user request. Referring now to the above example, to generate the EV charging price for the user request, the following steps are performed by the system,

Step 1 : The actual demand pool size computed for the next time step ( $N_{t+1}^{P_1}$ ) is the sum of current time of the actual demand pool size ( $N_t^{P_1}$ ), which (i) increases by raised user requests ( $A_t^{P_1}$ ) arriving from the tentative demand pool ($P_2$) into the actual demand pool ($P_1$), and (ii) decreases by the raised user requests ( $A_t^{P_1}$ ) for the accepted offered price arriving into the service pool S, and ( $D_t^R$ ) the user rejected offered prices as denoted below in equation 2,

$$N_{t+1}^{P_2} = (N_t^{P_2}) + \left|(A_t^Q\right| + D_t^R - A_t^{P_1} \text{ ---------- equation 2}$$

Step 2: The tentative demand pool size computed for the next time step ( $N_{t+1}^{P_2}$ ) is a sum of current time of the tentative demand pool size ( $N_t^{P_2}$ ), which (i) increases by an exogeneous variable and a total number of rejected EV charging demand requests price offers ( $D_t^R$ ) and, (ii) decreases by raised user requests ( $A_t^{P_1}$ ), to enter the actual demand pool ($P_1$) as denoted below in equation 3,

$$N_{t+1}^{P_1} = N_t^{P_1} + A_t^{P_1} - A_t^S - D_t^R \text{ ---------- equation 3}$$

Step 3: The service pool computed for the next time step ( $N_{t+1}^S$ ) increases by users who start EV charging ( $A_t^S$ ) and decreases by ( $D_t^S$ ) users finishing their EV charging and leaving the EV charging aggregator as denoted below in equation 4,

$$N_{t+1}^S = N_t^S + A_t^S - D_t^S \text{ ---------- equation 4}$$

Step 4: The total number of chargers predicted for the next time step ($K_{t+1}$) traces the total number of available chargers as current users starting EV charging ( $A_t^S$ ) and previous users finishing EV charging ( $D_t^S$ ), and the change observed in the number of active private chargers $\Delta K_t^{Private}$ depending on the offered price ($p_t$) as denoted below in equation 5,

$$K_{t+1} = K_t - A_t^S + D_t^S + \Delta K_t^{Private} \text{ --------- equation 5}$$

Step 5: The total number of users computed ( $A_t^S$ ) arriving to the service pool are limited by the total number of available chargers ($K_t$) at time as denoted below in equation 6,

$$A_t^S <= K_t \text{ ------------ equation 6}$$

Step 6: Maximizing the EV charging aggregator revenue is the product of total revenue counted over all the user requests and the users accepting the pricing offers as denoted below in equation 7,

$$\sum_{t \in [0,T]} \sum_{i \in u} I_i(t) p_i \text{ --------------- equation 7}$$

The action chosen ($A_t$) is simply the price ($p_t$) and the instantaneous reward $R_t$ obtained by the action ($A_t$) is the revenue over the next timestep.

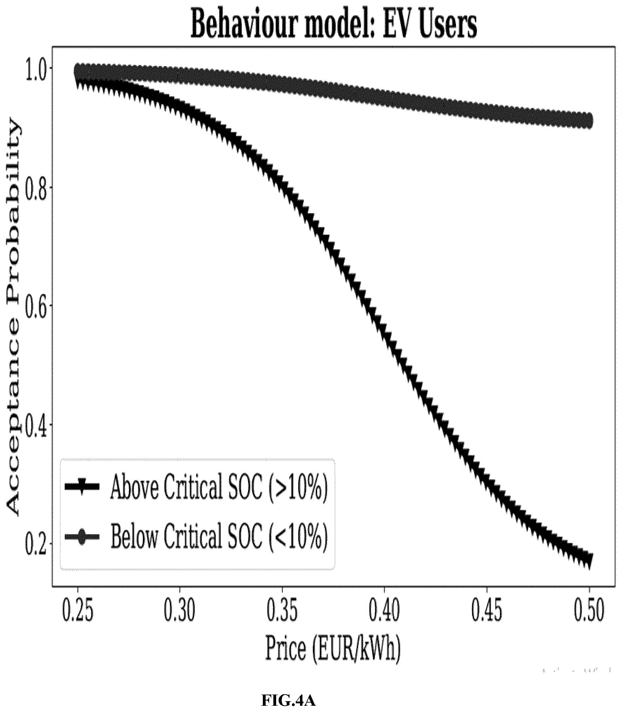

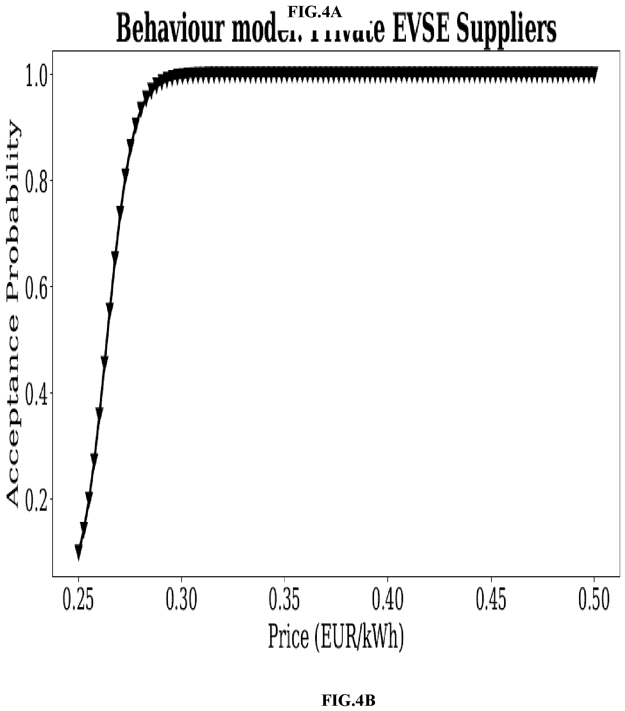

FIG.4A and FIG.4B illustrate a behavior model of EV users and private EVSE suppliers using the system of FIG. 1, in accordance with some embodiments of the present disclosure. In the experimental analysis set-up, all EV users whose stochastic model constraints is less than 70% can raise a charging request. Such users are referred to as the tentative demand pool. Users who request charging are added to the actual demand pool; and offered a price ($p_t$). The user either accepts ($p_t$) and moves to the service pool; or rejects ($p_t$) and goes back to the tentative demand pool. The acceptance or rejection is a probabilistic event that is modeled as shown in FIG.4A. The X-axis is the offered price (between 0.25-0.5 EUR/kWh); and the Y-axis shows the probability of acceptance. If the SoC is not in critical state (i.e., SoC > 10%), the probability of acceptance at a lower price ($p_t$) is higher. As the SoC depletes and goes below a critical level (i.e., SoC < 10%), users would accept an arbitrarily high offered price. FIG.4B shows a similar probability of supply for private garages where the acceptance to join the system is higher when the price is above an expected threshold (i.e., 30% more than the minimum charging cost at public chargers).

In one embodiment, the transport simulator acts as an integrator for the EV model for Tesla Model-S (85 kWh RWD) and the system model is integrated with

SUMO (Simulation of Urban Mobility). LuST (Luxembourg SUMO traffic scenario) that simulates the traffic in the city of Luxembourg. The Luxembourg city map and its household demographics from OpenStreetMap (state of the art technique), and public charging locations from Open Charge Map (state of the art technique). The LuST scenario inserts roughly 176, 000 cars into the simulation over its 24 hours duration. The method randomly chooses 4% of cars as EVs, in order to maintain the population of simulated EVs consistent with the statistics reported for Luxembourg city. Out of this pool, the randomly marked 42% as garage-orphaned electric cars, which charge on-the-go using public chargers.

The RL agent is implemented using the TensorFlow framework. The details about the neural network architecture and the hyperparameters used in the learning and testing are as follows: (i) DQN (Deep Q-Network) architecture:(4,64,64,50); (ii) optimizer: Adam; (iii) learning rate: 0.001; (iv) discount factor: 0.8; (v) mini batch size: 64; (vi) replay buffer size: 10% of training epochs; (vii) exploration factor: 0.95 to 0.05 (decay in steps of 0.05); (viii) training epochs per episode: 288. The training consisted of 40 episodes and testing 10 episodes, where 1 episode is the same as 1 day.

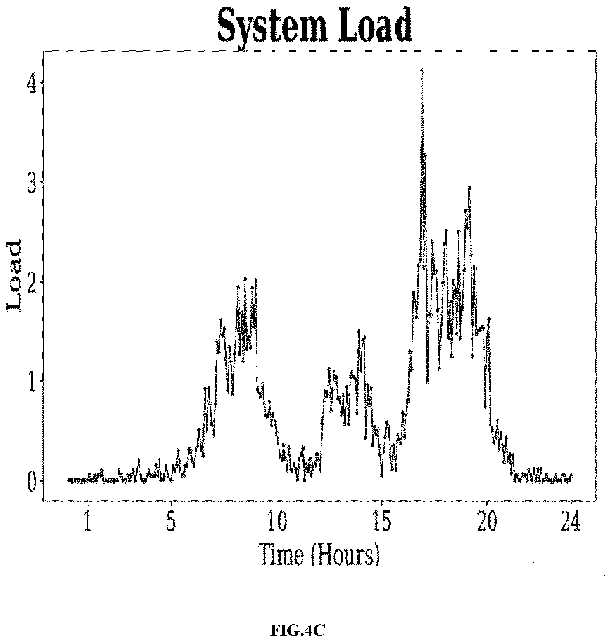

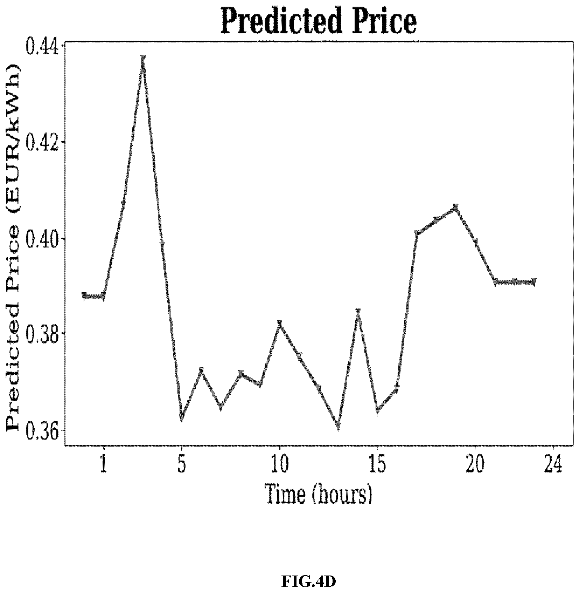

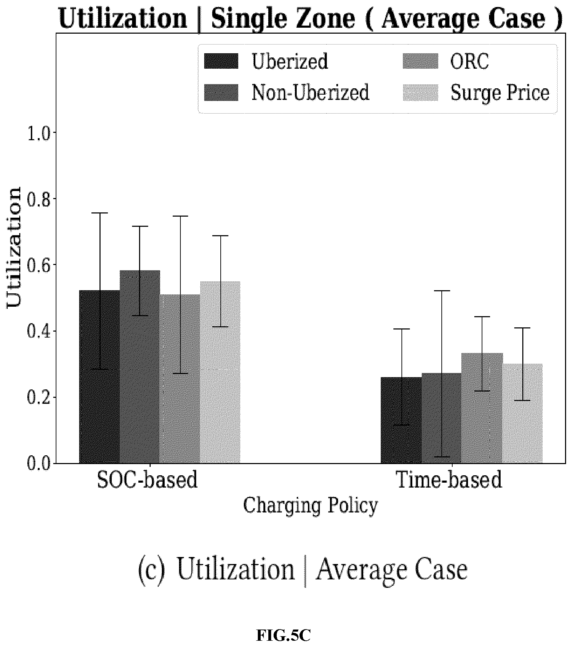

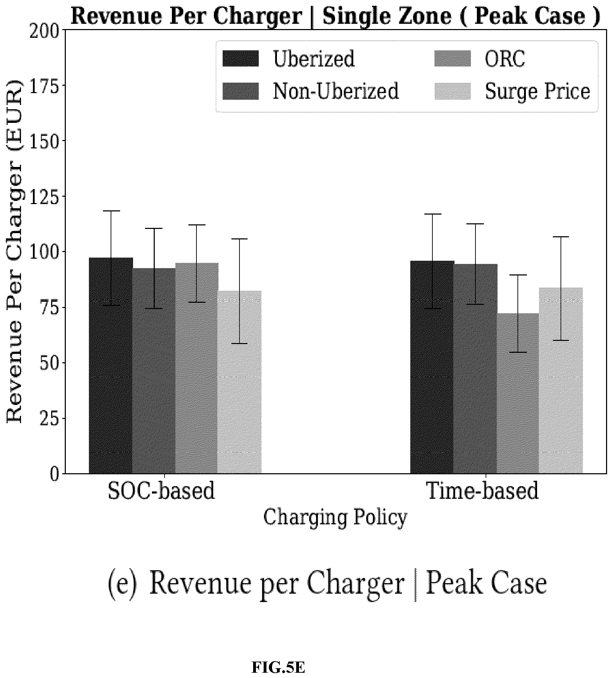

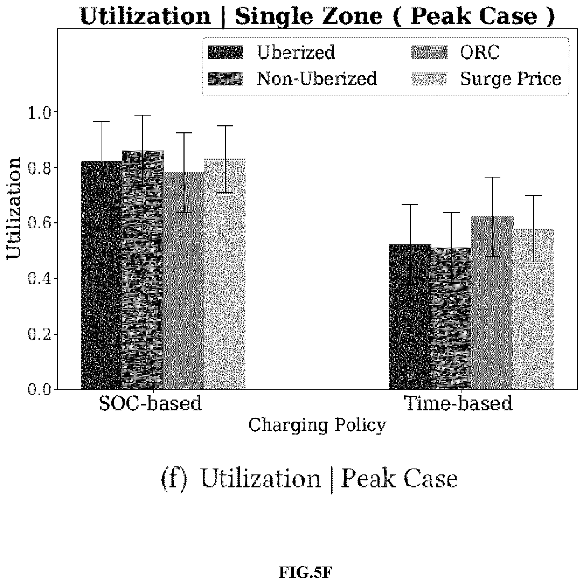

FIG.4C and FIG.4D illustrate graphical representation of system load vs predicted price maximizing EV aggregator revenue using the system of FIG.1, in accordance with some embodiments of the present disclosure. FIG.4C shows a basic test of the price predicted by the RL agent against the charging load experienced by the system. From the FIG.5C it is observed that the price varies with the load; except for

the early hours of the day (midnight to 5AM). This happens since very few charging requests are received during this time, and they are mostly from EVs with below critical SoC levels. Therefore, to maximize the revenue, the agent decides to keep the price high. Considering the business metrics of aggregate revenue

per charger, and utilization are analyzed. The method of the present disclosure is compared against the following three baselines where the supply-side consists of only public chargers, (i) In the first baseline, the RL agent takes the state inputs capture the information of available public chargers with the same action space and reward signal, (ii) In the second baseline, an online competitive algorithm for sequential EV arrivals but assumes that SoCs are known, and (iii) In the third baseline (heuristics-I), which surges by two times the base price when load exceeds 1.

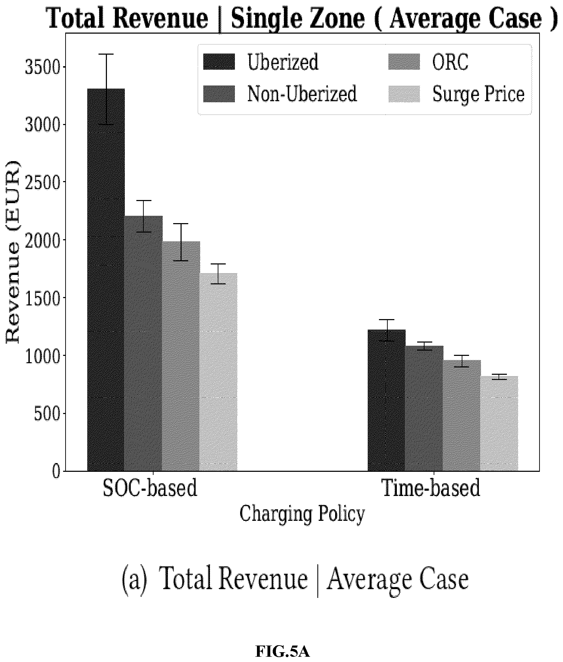

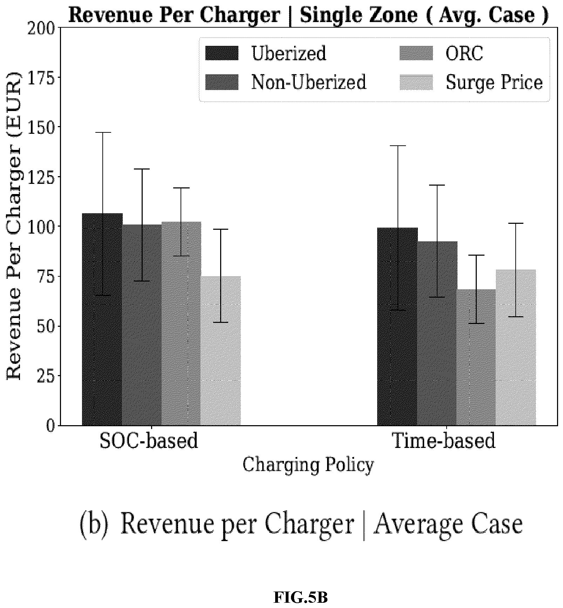

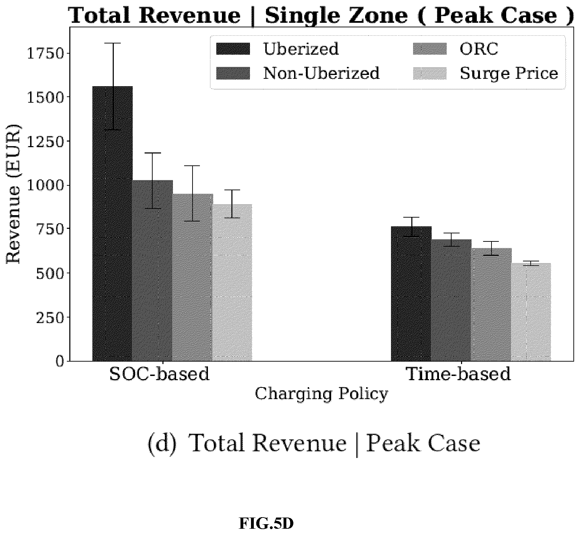

FIG.5A to FIG.5F illustrates performance of the RL agent with various (business) metrics compared during peak hours and on average for generating pricing for EV charging aggregators for maximizing revenue using the system of FIG.1, in accordance with some embodiments of the present disclosure. FIG.5A to FIG.5F shows the performance of the RL agent in terms of business metrics. FIG.5A to FIG.5C plot the total revenue, revenue per charger, and utilization, respectively, for the average case, while the same metrics are shown in FIG.5D to FIG.5F for the peak case. For the SOC-based charging policy, on average, it is observed that the RL agent gets 35% more revenue than all other baselines. Since the utilization of the chargers is almost similar

across all cases (FIG. 5C), the revenue increase is not only due to a greater number of chargers in the system, but also from a higher average revenue per charger (FIG. 5B). However, this does not hold good in the peak case, where the higher revenue of the RL agent is primarily from using a larger pool of available chargers. For the time-based charging policy where every EV can charge for a predefined short time-period, the system is able to service charging requests at a faster rate. Therefore, for the same demand profile, it brings down the load on the system by making chargers more available. In this case, compared to other baselines, the RL agent gets an additional revenue of 3-10%.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of charging electric vehicles. The embodiments, thus provide method and system to generate pricing for charging electric vehicles. Moreover, the embodiments herein further provide dynamically generates pricing policies to maximize aggregator revenue based on stochastic model constraints and user behavioral models. The EV charging aggregator having an RL agent receives user requests to generate pricing based on a tentative demand pool, an actual demand pool, and a service pool. The method learns the pricing policies that maximize the aggregate revenue but without making any assumptions about the stochastic dynamics of the system, or data availability, or user behavioral models.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method to generate pricing for charging electric vehicles **characterized in that**:

   receiving by an electric vehicle, EV, charging aggregator having an Reinforcement Learning, RL, agent via one or more hardware processors (104), a user request comprising an EV charging demand request and a time of day to generate an EV charging price to maximize revenue of the EV charging aggregator;
   modelling using a state generator, via the one or more hardware processors (104), a state of the RL agent for processing the user request and assigning a reward to the RL agent for the performed action, wherein the state of the RL agent includes i. the actual demand pool size $N_t^{P_1}$, ii. the service pool size $N_t^S$, iii. the total number of currently available EV chargers $K_t$ at current time step, and iv. the time of day $t_d$ of the user request so that time-of-day effects in user behavior are learnt over time, wherein the state of the RL agent is spatially tagged with the EV charging demand request and availability of EV supply equipment, EVSE, wherein the EV charging demand request is Global Positioning System, GPS, location stamped and the EV charger aggregator obtains current availability of participating EVSEs, wherein the RL agent learns to map action to observed state and maximizes the reward earned over training period, wherein the RL agent is trained and implemented using a Deep Q-network, DQN; and

dynamically generating by the RL agent, via the one or more hardware processors (104), the EV charging price for the user request, without a priori knowledge, to maximize revenue of the EV charging aggregator by, computing i. an actual demand pool $P_1$ based on a next time step of actual demand pool size $N_{t+1}^{P_1}$, ii. a service pool S based on a next time step of service pool size $N_t^S$, iii. a total number of currently available EV chargers $K_t$, and iv. a time of day $t_d$ of the user request.

2. The processor implemented method as claimed in claim 1, wherein computing the actual demand pool size for the next time step ( $N_{t+1}^{P_1}$ ) is the sum of current time of the actual demand pool size $N_t^{P_1}$, which i. increases by raised user requests $A_t^{P_1}$ arriving from the tentative demand pool $P_2$ into the actual demand pool $P_1$, and ii. decreases by the raised user requests $A_t^{P_1}$ for the accepted offered price arriving into the service pool S, and $D_t^R$ the user rejected offered prices.

3. The processor implemented method as claimed in claim 1, wherein computing the tentative demand pool size for the next time step $N_{t+1}^{P_2}$ is a sum of current time of the tentative demand pool size $N_t^{P_2}$, which i. increases by an exogeneous variable and a total number of rejected EV charging demand requests price offers $D_t^R$ and, ii. decreases by raised user requests $A_t^{P_1}$, to enter the actual demand pool $P_1$.

4. The processor implemented method as claimed in claim 1, wherein computing the service pool for the next time step ( $N_{t+1}^S$ ) increases by users who start EV charging $A_t^S$ and decreases by $D_t^S$ users finishing their EV charging and leaving the EV charging aggregator.

5. The processor implemented method as claimed in claim 1, wherein predicting the total number of chargers for the next time step $K_{t+1}$ traces the total number of available chargers as current users starting EV charging $A_t^S$ and previous users finishing EV charging ( $D_t^S$ ), and the change observed in the number of active private chargers $\Delta K_t^{Private}$ depending on the offered price $p_t$, wherein the total number of users $A_t^S$ arriving to the service pool are limited by the total number of available chargers $K_t$ at time.

6. The processor implemented method as claimed in claim 1, wherein maximizing the EV charging aggregator revenue is the product of total revenue counted over all the user requests and the users accepting the pricing offers.

7. A system (100) to generate pricing for charging electric vehicles, comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions, **char-**

**acterized in that**:

receive via an electric vehicle, EV, charging aggregator having an Reinforcement Learning, RL, agent, a user request comprising an EV charging demand request and a time of day to generate an EV charging price to maximize revenue of the EV charging aggregator;

model using a state generator, a state of the RL agent for processing the user request and assigning a reward to the RL agent for the performed action, wherein the state of the RL agent includes i. the actual demand pool size $N_t^{P_1}$, ii. the service pool size $N_t^S$, iii. the total number of currently available EV chargers $K_t$ at current time step, and iv. the time of day $t_d$ of the user request so that time-of-day effects in user behavior are learnt over time, wherein the state of the RL agent is spatially tagged with the EV charging demand request and availability of EV supply equipment, EVSE , wherein the EV charging demand request is Global Positioning System, GPS, location stamped and the EV charger aggregator obtains current availability of participating EVSEs , wherein the RL agent learns to map action to observed state and maximizes the reward earned over training period, wherein the RL agent is trained and implemented using a Deep Q-network, DQN; and

dynamically generate by the RL agent, the EV charging price for the user request, without a priori knowledge, to maximize revenue of the EV charging aggregator by, computing i. an actual demand pool $P_1$ based on a next time step of actual demand pool size $N_{t+1}^{P_1}$, ii. a service pool (S) based on a next time step of service pool size $N_t^S$, iii. a total number of currently available EV chargers $K_t$, and iv. a time of day $t_d$ of the user request.

8. The system (100) as claimed in claim 7, wherein computing the actual demand pool size for the next time step ( $N_{t+1}^{P_1}$ ) is the sum of current time of the actual demand pool size $N_t^{P_1}$, which i. increases by raised user requests $A_t^{P_1}$ arriving from the tentative demand pool $P_2$ into the actual demand pool $P_1$, and ii. decreases by the raised user requests $A_t^{P_1}$ for the accepted offered price arriving into the service pool S, and $D_t^R$ the user rejected offered prices.

9. The system (100) as claimed in claim 7, wherein computing the tentative demand pool size for the next time step $N_{t+1}^{P_2}$ is a sum of current time of the tentative demand pool size $N_t^{P_2}$, which i. increases by an exogeneous variable and a total number of rejected EV charging demand requests price offers Df and, ii. decreases by raised user requests $A_t^{P_1}$, to enter the actual demand pool $P_1$.

10. The system (100) as claimed in claim 7, wherein computing the service pool for the next time step ( $N_{t+1}^S$ ) increases by users who start EV charging $A_t^S$ and decreases by $D_t^S$ users finishing their EV charging and leaving the EV charging aggregator, wherein the total number of users $A_t^S$ arriving to the service pool are limited by the total number of available chargers $K_t$ at time, wherein the EV charging aggregator revenue is maximized by the product of total revenue counted over all the user requests and the users accepting the pricing offers.

11. One or more non-transitory machine-readable information storage mediums comprising one or more instructions which when executed by one or more hardware processors (104) perform actions **characterized in that**:

receiving via an electric vehicle, EV, charging aggregator having an Reinforcement Learning, RL, agent, a user request comprising an EV charging demand request and a time of day to generate an EV charging price to maximize revenue of the EV charging aggregator;

modelling by using a state generator, a state of the RL agent for processing the user request and assigning a reward to the RL agent for the performed action, wherein the state of the RL agent includes i. the actual demand pool size $N_t^{P_1}$, ii. the service pool size $N_t^{S}$, iii. the total number of currently available EV chargers $K_t$ at current time step, and iv. the time of day $t_d$ of the user request so that time-of-day effects in user behavior are learnt over time, wherein the state of the RL agent is spatially tagged with the EV charging demand request and availability of EV supply equipment, EVSE , wherein the EV charging demand request is Global Positioning System, GPS, location stamped and the EV charger aggregator obtains current availability of participating EVSEs, wherein the RL agent learns to map action to observed state and maximizes the reward earned over training period, wherein the RL agent is trained and implemented using a Deep Q-network, DQN; and dynamically generating by the RL agent, the EV charging price for the user request, without a priori knowledge, to maximize revenue of the EV charging aggregator by, computing i. an actual demand pool $P_1$ based on a next time step of actual demand pool size ( $N_{t+1}^{P_1}$ ), ii. a service pool S based on a next time step of service pool size $N_t^{S}$, iii. a total number of currently available EV chargers $K_t$, and iv. a time of day $t_d$ of the user request.

12. The one or more non-transitory machine-readable information storage mediums of claim 11, wherein computing the actual demand pool size for the next time step ( $N_{t+1}^{P_1}$ ) is the sum of current time of the actual demand pool size ( $N_t^{P_1}$ ), which (i) increases by raised user requests ( $A_t^{P_1}$ ) arriving from the tentative demand pool ($P_2$) into the actual demand pool ($P_1$), and (ii) decreases by the raised user requests ( $A_t^{P_1}$ ) for the accepted offered price arriving into the service pool S, and ( $D_t^{R}$ ) the user rejected offered prices.

## Patentansprüche

1. Prozessorimplementiertes Verfahren zum Erzeugen von Preisen zum Laden von Elektrofahrzeugen, **dadurch gekennzeichnet, dass**:

Empfangen durch einen Elektrofahrzeug-, EV-, Ladeaggregator mit einem Verstärkungslern-, RL-, Agenten über einen oder mehrere Hardwareprozessoren (104) einer Benutzeranforderung, die eine EV-Ladebedarfsanforderung und eine Tageszeit umfasst, um einen EV-Ladepreis zu erzeugen, um die Einnahmen des EV-Ladeaggregators zu maximieren;
Modellieren unter Verwendung eines Zustandsgenerators über den einen oder die mehreren Hardwareprozessoren (104) eines Zustands des RL-Agenten zum Verarbeiten der Benutzeranforderung und Zuweisen einer Belohnung an den RL-Agenten für die durchgeführte Aktion, wobei der Zustand des RL-Agenten i. die tatsächliche Bedarfspoolgröße $N_t^{P_1}$, ii. die Dienstpoolgröße $N_t^{S}$, iii. die Gesamtanzahl der aktuell verfügbaren EV-Ladegeräte $K_t$ zum aktuellen Zeitschritt und iv. die Tageszeit $t_d$ der Benutzeranforderung beinhaltet, so dass Tageszeiteffekte im Benutzerverhalten im Laufe der Zeit gelernt werden, wobei der Zustand des RL-Agenten räumlich mit der EV-Ladebedarfsanforderung und der Verfügbarkeit von EV-Versorgungsausrüstung, EVSE, markiert ist, wobei die EV-Ladebedarfsanforderung mit einem Global Positioning System-, GPS-, Ortsstempel versehen ist und der EV-Ladeaggregator die aktuelle Verfügbarkeit teilnehmender EVSEs erhält, wobei der RL-Agent lernt, die Aktion auf den beobachteten Zustand abzubilden, und die über den Trainingszeitraum verdiente Belohnung maximiert, wobei der RL-Agent unter Verwendung eines tiefen Q-Netzwerks, DQN, trainiert und implementiert wird; und
dynamisches Erzeugen durch den RL-Agenten über den einen oder die mehreren Hardwareprozessoren (104) des EV-Ladepreises für die Benutzeranforderung ohne A-priori-Wissen, um die Einnahmen des EV-Ladeaggregators zu maximieren, durch Berechnen i. eines tatsächlichen Bedarfspools $P_1$ basierend auf einem nächsten Zeitschritt der tatsächlichen Bedarfspoolgröße $N_{t+1}^{P_1}$, ii. eines Dienstpools S basierend auf einem nächsten Zeitschritt der Dienstpoolgröße $N_t^{S}$, iii. einer Gesamtanzahl der aktuell verfügbaren EV-Ladegeräte $K_t$ und iv. einer Tageszeit $t_d$ der Benutzeranforderung.

2. Prozessorimplementiertes Verfahren nach Anspruch 1, wobei das Berechnen der tatsächlichen Bedarfspoolgröße für den nächsten Zeitschritt ( $N_{t+1}^{P_1}$ ) die Summe der aktuellen Zeit der tatsächlichen Bedarfspoolgröße $N_t^{P_1}$ ist, die i. durch erhöhte Benutzeranforderungen $A_t^{P_1}$ , die von dem vorläufigen Bedarfspool $P_2$ in den tatsächlichen Bedarfspool $P_1$, ankommen, zunimmt und ii. durch die erhöhten Benutzeranforderungen $A_t^{P_1}$ für den akzeptierten angebotenen Preis, der in den Dienstpool S ankommt, abnimmt, und $D_t^R$ die vom Benutzer abgelehnten angebotenen Preise.

3. Prozessorimplementiertes Verfahren nach Anspruch 1, wobei das Berechnen der vorläufigen Bedarfspoolgröße für den nächsten Zeitschritt $N_{t+1}^{P_2}$ eine Summe der aktuellen Zeit der vorläufigen Bedarfspoolgröße $N_t^{P_2}$ ist, die i. durch eine exogene Variable und eine Gesamtanzahl der abgelehnten EV-Ladebedarfsanforderungspreisangebote $D_t^R$ zunimmt und ii. durch erhöhte Benutzeranforderungen $A_t^{P_1}$ abnimmt, um in den tatsächlichen Bedarfspool $P_1$ einzutreten.

4. Prozessorimplementiertes Verfahren nach Anspruch 1, wobei das Berechnen des Dienstpools für den nächsten Zeitschritt ( $N_{t+1}^S$ ) durch Benutzer, die mit dem EV-Laden beginnen $A_t^S$ , zunimmt und um $D_t^S$ Benutzer, die ihr EV-Laden beenden und den EV-Ladeaggregator verlassen, abnimmt.

5. Prozessorimplementiertes Verfahren nach Anspruch 1, wobei das Vorhersagen der Gesamtanzahl der Ladegeräte für den nächsten Zeitschritt $K_{t+1}$ die Gesamtanzahl der verfügbaren Ladegeräte als aktuelle Benutzer, die mit dem EV-Laden beginnen $A_t^S$ und vorherige Benutzer, die das EV-Laden beenden ( $D_t^S$ ), und die beobachtete Änderung der Anzahl der aktiven privaten Ladegeräte $\Delta K_t^{Privat}$ in Abhängigkeit von dem angebotenen Preis $p_t$ verfolgt, wobei die Gesamtanzahl der Benutzer $A_t^S$ , die zu dem Dienstpool ankommen, durch die Gesamtanzahl der verfügbaren Ladegeräte $K_t$ zur Zeit begrenzt ist.

6. Prozessorimplementiertes Verfahren nach Anspruch 1, wobei das Maximieren der Einnahmen des EV-Ladeaggregators das Produkt der Gesamteinnahmen, die über alle Benutzeranforderungen gezählt werden, und der Benutzer, die die Preisangebote akzeptieren, ist.

7. System (100) zum Erzeugen von Preisen zum Laden von Elektrofahrzeugen, umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind, **dadurch gekennzeichnet, dass**:

Empfangen über einen Elektrofahrzeug-, EV-, Ladeaggregator mit einem Verstärkungslern-, RL-, Agenten einer Benutzeranforderung, die eine EV-Ladebedarfsanforderung und eine Tageszeit umfasst, um einen EV-Ladepreis zu erzeugen, um die Einnahmen des EV-Ladeaggregators zu maximieren;
Modellieren unter Verwendung eines Zustandsgenerators eines Zustands des RL-Agenten zum Verarbeiten der Benutzeranforderung und Zuweisen einer Belohnung an den RL-Agenten für die durchgeführte Aktion, wobei der Zustand des RL-Agenten i. die tatsächliche Bedarfspoolgröße $N_t^{P_1}$, ii. die Dienstpoolgröße $N_t^S$ , iii. die Gesamtanzahl der aktuell verfügbaren EV-Ladegeräte $K_t$ zum aktuellen Zeitschritt und iv. die Tageszeit $t_d$ der Benutzeranforderung beinhaltet, so dass Tageszeiteffekte im Benutzerverhalten im Laufe der Zeit gelernt werden, wobei der Zustand des RL-Agenten räumlich mit der EV-Ladebedarfsanforderung und der Verfügbarkeit von EV-Versorgungsausrüstung, EVSE, markiert ist, wobei die EV-Ladebedarfsanforderung mit einem Global Positioning System-, GPS-, Ortsstempel versehen ist und der EV-Ladeaggregator die aktuelle Verfügbarkeit teilnehmender EVSEs erhält, wobei der RL-Agent lernt, die Aktion auf den beobachteten Zustand abzubilden, und die über den Trainingszeitraum verdiente Belohnung maximiert, wobei der RL-Agent unter Verwendung eines tiefen Q-Netzwerks, DQN, trainiert und implementiert wird; und dynamisches Erzeugen durch den RL-Agenten des EV-Ladepreises für die Benutzeranforderung ohne A-priori-Wissen, um die Einnahmen des EV-Ladeaggregators zu maximieren, durch Berechnen i. eines tatsächlichen Bedarfspools $P_1$ basierend auf einem nächsten Zeitschritt der tatsächlichen Bedarfspoolgröße $N_{t+1}^{P_1}$, ii. eines Dienstpools (S) basierend auf einem nächsten Zeitschritt der Dienstpoolgröße $N_t^S$, iii. einer Gesamtanzahl der aktuell verfügbaren EV-Ladegeräte $K_t$ und iv. einer Tageszeit $t_d$ der Benutzeranforderung.

8. System (100) nach Anspruch 7, wobei das Berechnen der tatsächlichen Bedarfspoolgröße für den nächsten Zeitschritt ( $N_{t+1}^{P_1}$ ) die Summe der aktuellen Zeit der tatsächlichen Bedarfspoolgröße $N_t^{P_1}$ ist, die i. durch erhöhte Benutzeranforderungen $A_t^{P_1}$, die von dem vorläufigen Bedarfspool $P_2$ in den tatsächlichen Bedarfspool $P_1$, ankommen, zunimmt und ii. durch die erhöhten Benutzeranforderungen $A_t^{P_1}$ für den akzeptierten angebotenen Preis, der in den Dienstpool S ankommt, abnimmt, und $D_t^R$ die vom Benutzer abgelehnten angebotenen Preise.

9. System (100) nach Anspruch 7, wobei das Berechnen der vorläufigen Bedarfspoolgröße für den nächsten Zeitschritt $N_{t+1}^{P_2}$ eine Summe der aktuellen Zeit der vorläufigen Bedarfspoolgröße $N_t^{P_2}$ ist, die i. durch eine exogene Variable und eine Gesamtanzahl der abgelehnten EV-Ladebedarfsanforderungspreisangebote $D_t^R$ zunimmt und ii. durch erhöhte Benutzeranforderungen $A_t^{P_1}$ abnimmt, um in den tatsächlichen Bedarfspool $P_1$ einzutreten.

10. System (100) nach Anspruch 7, wobei das Berechnen des Dienstpools für den nächsten Zeitschritt ( $N_{t+1}^S$ ) durch Benutzer, die mit dem EV-Laden beginnen $A_t^S$, zunimmt und um $D_t^S$ Benutzer, die ihr EV-Laden beenden und den EV-Ladeaggregator verlassen, abnimmt, wobei die Gesamtanzahl der Benutzer $A_t^S$, die zu dem Dienstpool ankommen, durch die Gesamtanzahl der verfügbaren Ladegeräte $K_t$ zur Zeit begrenzt ist, wobei die Einnahmen des EV-Ladeaggregators durch das Produkt der Gesamteinnahmen, die über alle Benutzeranforderungen gezählt werden, und der Benutzer, die die Preisangebote akzeptieren, maximiert werden.

11. Ein oder mehrere nichtflüchtige maschinenlesbare Informationsspeichermedien, die eine oder mehrere Anweisungen umfassen, die, wenn sie durch einen oder mehrere Hardwareprozessoren (104) ausgeführt werden, Aktionen durchführen, **dadurch gekennzeichnet, dass**:

Empfangen über einen Elektrofahrzeug-, EV-, Ladeaggregator mit einem Verstärkungslern-, RL-, Agenten, einer Benutzeranforderung, die eine EV-Ladebedarfsanforderung und eine Tageszeit umfasst, um einen EV-Ladepreis zu erzeugen, um die Einnahmen des EV-Ladeaggregators zu maximieren;

Modellieren unter Verwendung eines Zustandsgenerators eines Zustands des RL-Agenten zum Verarbeiten der Benutzeranforderung und Zuweisen einer Belohnung an den RL-Agenten für die durchgeführte Aktion, wobei der Zustand des RL-Agenten i. die tatsächliche Bedarfspoolgröße $N_t^{P_1}$, ii. die Dienstpoolgröße $Nt$, iii. die Gesamtanzahl der aktuell verfügbaren EV-Ladegeräte $K_t$ zum aktuellen Zeitschritt und iv. die Tageszeit $t_d$ der Benutzeranforderung beinhaltet, so dass Tageszeiteffekte im Benutzerverhalten im Laufe der Zeit gelernt werden, wobei der Zustand des RL-Agenten räumlich mit der EV-Ladebedarfsanforderung und der Verfügbarkeit von EV-Versorgungsausrüstung, EVSE, markiert ist, wobei die EV-Ladebedarfsanforderung mit einem Global Positioning System-, GPS-, Ortsstempel versehen ist und der EV-Ladeaggregator die aktuelle Verfügbarkeit teilnehmender EVSEs erhält, wobei der RL-Agent lernt, die Aktion auf den beobachteten Zustand abzubilden, und die über den Trainingszeitraum verdiente Belohnung maximiert, wobei der RL-Agent unter Verwendung eines tiefen Q-Netzwerks, DQN, trainiert und implementiert wird; und
dynamisches Erzeugen durch den RL-Agenten des EV-Ladepreises für die Benutzeranforderung ohne A-priori-Wissen, um die Einnahmen des EV-Ladeaggregators zu maximieren, durch Berechnen i. eines tatsächlichen Bedarfspools $P_1$ basierend auf einem nächsten Zeitschritt der tatsächlichen Bedarfspoolgröße ( $N_{t+1}^{P_1}$ ), ii. eines Dienstpools S basierend auf einem nächsten Zeitschritt der Dienstpoolgröße $N_t^S$, iii. einer Gesamtanzahl der aktuell verfügbaren EV-Ladegeräte $K_t$ und iv. einer Tageszeit $t_d$ der Benutzeranforderung.

**12.** Ein oder mehrere nichtflüchtige maschinenlesbare Informationsspeichermedien nach Anspruch 11, wobei das Berechnen der tatsächlichen Bedarfspoolgröße für den nächsten Zeitschritt ( $N_{t+1}^{P_1}$ ) die Summe der aktuellen Zeit der tatsächlichen Bedarfspoolgröße ( $N_t^{P_1}$ ) ist, die (i) durch erhöhte Benutzeranforderungen ( $A_t^{P_1}$ ), die von dem vorläufigen Bedarfspool ($P_2$) in den tatsächlichen Bedarfspool ($P_1$), ankommen, zunimmt und (ii) durch die erhöhten Benutzeranforderungen ( $A_t^{P_1}$ ) für den akzeptierten angebotenen Preis, der in den Dienstpool S ankommt, abnimmt, und ( $D_t^R$ ) die vom Benutzer abgelehnten angebotenen Preise.

**Revendications**

**1.** Procédé mis en oeuvre par processeur pour générer des prix de recharge de véhicules électriques, **caractérisé en ce que** :

la réception par un agrégateur de recharge de véhicule électrique, VE, ayant un agent d'apprentissage de renforcement, RL, via un ou plusieurs processeurs matériels (104), d'une demande d'utilisateur comprenant une demande de demande de recharge de VE et une heure de la journée pour générer un prix de recharge de VE afin de maximiser les revenus de l'agrégateur de recharge de VE ;
la modélisation à l'aide d'un générateur d'état, via le ou les processeurs matériels (104), d'un état de l'agent RL pour traiter la demande d'utilisateur et attribuer une récompense à l'agent RL pour l'action effectuée, dans lequel l'état de l'agent RL inclut i. la taille de pool de demande réelle $N_t^{P_1}$, ii. la taille de pool de service $N_t^S$, iii. le nombre total de bornes de recharge VE actuellement disponibles $K_t$ à l'instant t et iv. l'heure de la journée $t_d$ de la demande d'utilisateur de sorte que les effets de l'heure de la journée sur le comportement de l'utilisateur soient appris au fil du temps, dans lequel l'état de l'agent RL est spatialement marqué avec la demande de recharge de VE et la disponibilité d'équipement de recharge de VE, EVSE, dans lequel la demande de demande de charge de VE est estampillé par un système de positionnement, GPS, et l'agrégateur de recharge de VE obtient la disponibilité actuelle d'EVSE participants, dans lequel l'agent RL apprend à associer l'action à l'état observé et maximise la récompense obtenue au cours de la période d'entraînement, dans lequel l'agent RL est entraîné et mis en oeuvre à l'aide d'un réseau Q profond (DQN) ; et
la génération dynamique par l'agent RL, via le ou les processeurs matériels (104), du prix de recharge de VE pour la demande d'utilisateur, sans connaissance a priori, afin de maximiser les revenus de l'agrégateur de recharge de VE en calculant i. un pool de demande réelle $P_1$ sur la base d'une étape temporelle suivante de taille de pool de demande réelle $N_{t+1}^{P_1}$, ii. un pool de service S sur la base d'une étape temporelle suivante de taille de pool de service $N_t^S$, iii. un nombre total de borne de recharge de VE actuellement disponibles $K_t$, et iv. l'heure de la journée $t_d$ de la demande d'utilisateur.

**2.** Procédé mis en oeuvre par processeur selon la revendication 1, dans lequel le calcul de la taille de pool de demande réelle pour l'étape temporelle suivante (est la somme de la taille du pool de demande réel à l'instant t $N_t^{P_1}$, qui i.

augmente par des demandes d'utilisateur accrues $A_t^{P_1}$ arrivant du pool de demande provisoire $P_2$ vers le pool de demande réelle $P_1$, et ii. diminue par les demandes d'utilisateur accrues $A_t^{P_1}$ pour le prix offert accepté arrivant dans le pool de service S, et par $D_t^R$ les prix offerts rejetés par l'utilisateur.

3. Procédé mis en oeuvre par processeur selon la revendication 1, dans lequel le calcul de la taille de pool de demande provisoire pour l'étape temporelle suivante $N_{t+1}^{P_2}$ est la somme de la taille du pool de demande provisoire à l'instant t $N_t^{P_2}$, qui i. augmente par une variable exogène et le nombre total d'offres de prix de demande de recharge de VE rejetées $D_t^R$ et, ii. diminue par des demandes d'utilisateur accrues $A_t^{P_1}$, pour entrer dans le pool de demande réelle $P_1$.

4. Procédé mis en oeuvre par processeur selon la revendication 1, dans lequel le calcul du pool de service pour l'étape temporelle suivante ( $N_{t+1}^S$ ) augmente par des utilisateurs qui commencent à recharger leur VE $A_t^S$ et diminue par $D_t^S$ des utilisateurs terminant leur recharge de VE et quittant l'agrégateur de recharge de VE.

5. Procédé mis en oeuvre par processeur selon la revendication 1, dans lequel la prédiction du nombre total de bornes de recharge pour l'étape temporelle suivante $K_{t+1}$ suit le nombre total de bornes disponibles en fonction des utilisateurs actuels commençant à recharger leur VE $A_t^S$ et des utilisateurs précédents terminant leur recharge de VE ( $D_t^S$ ), et le changement observé dans le nombre de bornes privées actives $\Delta K_t^{Private}$ en fonction du prix offert $p_t$, dans lequel le nombre total d'utilisateurs $A_t^S$ arrivant au pool de service est limité par le nombre total de bornes disponibles $K_t$ à la fois.

6. Procédé mis en oeuvre par processeur selon la revendication 1, dans lequel la maximisation des revenus de l'agrégateur de recharge de VE est le produit des revenus totaux comptabilisés pour toutes les demandes d'utilisateur et les utilisateurs acceptant les offres de prix.

7. Système (100) pour générer des prix de recharge des véhicules électriques, comprenant :

une mémoire (102) stockant des instructions ;
une ou plusieurs interfaces de communication (106) ; et
un ou plusieurs processeurs matériels (104) couplés à la mémoire (102) via la ou les interfaces de communication (106), dans lequel le ou les processeurs matériels (104) sont configurés par les instructions, **caractérisé en ce que** :

la réception par un agrégateur de recharge de véhicule électrique, VE ayant un agent d'apprentissage de renforcement, RL, via un ou plusieurs processeurs matériels (104), d'une demande d'utilisateur comprenant une demande de demande de recharge de VE et une heure de la journée pour générer un prix de recharge de VE afin de maximiser les revenus de l'agrégateur de recharge de VE ;
la modélisation à l'aide d'un générateur d'état, via le ou les processeurs matériels (104), d'un état de l'agent RL pour traiter la demande d'utilisateur et attribuer une récompense à l'agent RL pour l'action effectuée, dans lequel l'état de l'agent RL inclut i. la taille de pool de demande réelle $N_t^{P_1}$, ii. la taille de pool de service $N_t^S$, iii. le nombre total de bornes de recharge VE actuellement disponibles $K_t$ à l'instant t et iv. l'heure de la journée $t_d$ de la demande d'utilisateur de sorte que les effets de l'heure de la journée sur le comportement de l'utilisateur soient appris au fil du temps, dans lequel l'état de l'agent RL est spatialement marqué avec la demande de recharge de VE et la disponibilité d'équipement de recharge de VE, EVSE, dans lequel la demande de demande de charge de VE est estampillé par un système de positionnement,GPS, et l'agrégateur de recharge de VE obtient la disponibilité actuelle d'EVSE participants, dans lequel l'agent RL apprend à associer l'action à l'état observé et maximise la récompense obtenue au cours de la période d'entraînement, dans lequel l'agent RL est entraîné et mis en oeuvre à l'aide d'un réseau Q profond, DQN; et

la génération dynamique par l'agent RL, via le ou les processeurs matériels (104), du prix de recharge de VE pour la demande d'utilisateur, sans connaissance a priori, afin de maximiser les revenus de l'agrégateur de recharge de VE en calculant i. un pool de demande réelle $P_1$ sur la base d'une étape temporelle suivante de taille de pool de demande réelle $N_{t+1}^{P_1}$, ii. un pool de service S sur la base d'une étape temporelle suivante de taille de pool de service $N_t^S$, iii. un nombre total de borne de recharge de VE actuellement disponibles $K_t$, et iv. l'heure de la journée $t_d$ de la demande d'utilisateur.

8. Système (100) selon la revendication 7, dans lequel le calcul de la taille de pool de demande réelle pour l'étape temporelle suivante ($N_{t+1}^{P_1}$) est la somme de la taille du pool de demande réel à l'instant t $N_t^{P_1}$, qui i. augmente par des demandes d'utilisateur accrues $A_t^{P_1}$ arrivant du pool de demande provisoire $P_2$ vers le pool de demande réelle $P_1$, et ii. diminue par les demandes d'utilisateur accrues $A_t^{P_1}$ pour le prix offert accepté arrivant dans le pool de service S, et par $D_t^R$ les prix offerts rejetés par l'utilisateur.

9. Système (100) selon la revendication 7, dans lequel le calcul de la taille de pool de demande provisoire pour l'étape temporelle suivante $N_{t+1}^{P_2}$ est la somme de la taille du pool de demande provisoire à l'instant t $N_t^{P_2}$, qui i. augmente par une variable exogène et le nombre total d'offres de prix de demandes de demande de recharge de VE rejetées Df et, ii. diminue par des demandes d'utilisateur accrues $A_t^{P_1}$, pour entrer dans le pool de demande réelle $P_1$.

10. Système (100) selon la revendication 7, dans lequel le calcul du pool de service pour l'étape temporelle suivante ($N_{t+1}^S$) augmente par des utilisateurs qui commencent à recharger leur VE $A_t^S$ et diminue par $D_t^S$ des utilisateurs terminant leur recharge de VE et quittant l'agrégateur de recharge de VE, dans lequel le nombre total d'utilisateurs $A_t^S$ arrivant au pool de service est limité par le nombre total de bornes disponibles $K_t$ à cet instant, dans lequel les revenus de l'agrégateur de recharge de VE sont maximisés par le produit des revenus totaux comptabilisés par toutes les demandes d'utilisateur et les utilisateurs acceptant les offres de prix.

11. Un ou plusieurs supports de stockage d'informations lisibles par machine non transitoires comprenant une ou plusieurs instructions qui, lorsqu'elles sont exécutées par un ou plusieurs processeurs matériels (104), effectuent des actions, **caractérisé en ce que** :

la réception par un agrégateur de recharge de véhicule électrique, VE, ayant un agent d'apprentissage de renforcement, RL, via un ou plusieurs processeurs matériels (104), d'une demande d'utilisateur comprenant une demande de demande de recharge de VE et une heure de la journée pour générer un prix de recharge de VE afin de maximiser les revenus de l'agrégateur de recharge de VE ;

la modélisation à l'aide d'un générateur d'état, via le ou les processeurs matériels (104), d'un état de l'agent RL pour traiter la demande d'utilisateur et attribuer une récompense à l'agent RL pour l'action effectuée, dans lequel l'état de l'agent RL inclut i. la taille de pool de demande réelle $N_t^{P_1}$, ii. la taille de pool de service $N_t^S$, iii. le nombre total de bornes de recharge VE actuellement disponibles $K_t$ à l'instant t et iv. l'heure de la journée $t_d$ de la demande d'utilisateur de sorte que les effets de l'heure de la journée sur le comportement de l'utilisateur soient appris au fil du temps, dans lequel l'état de l'agent RL est spatialement marqué avec la demande de recharge de VE et la disponibilité d'équipement de recharge de VE, EVSE, dans lequel la demande de demande de charge de VE est estampillé par un système de positionnement, GPS, et l'agrégateur de recharge de VE obtient la disponibilité actuelle d'EVSE participants, dans lequel l'agent RL apprend à associer l'action à l'état observé et maximise la récompense obtenue au cours de la période d'entraînement, dans lequel l'agent RL est entraîné et mis en oeuvre à l'aide d'un réseau Q profond, DQN ; et

la génération dynamique par l'agent RL, via le ou les processeurs matériels (104), du prix de recharge de VE pour la demande d'utilisateur, sans connaissance a priori, afin de maximiser les revenus de l'agrégateur de recharge de VE en calculant i. un pool de demande réelle $P_1$ sur la base d'une étape temporelle suivante de taille de pool de demande réelle $N_{t+1}^{P_1}$ , ii. un pool de service S sur la base d'une étape temporelle suivante de taille de pool de service $N_t^{S}$ , iii. un nombre total de borne de recharge de VE actuellement disponibles $K_t$, et iv. l'heure de la journée $t_d$ de la demande d'utilisateur.

12. Un ou plusieurs supports de stockage d'informations lisibles par machine non transitoires selon la revendication 11, dans lequel le calcul de la taille de pool de demande réelle pour l'étape temporelle suivante $\left(N_{t+1}^{P_1}\right)$ est la somme de la taille du pool de demande réel à l'instant t $N_t^{P_1}$ , qui i. augmente par des demandes d'utilisateur accrues $A_t^{P_1}$ arrivant du pool de demande provisoire $P_2$ vers le pool de demande réelle $P_1$, et ii. diminue par les demandes d'utilisateur accrues $A_t^{P_1}$ pour le prix offert accepté arrivant dans le pool de service S, et par $D_t^{R}$ les prix offerts rejetés par l'utilisateur.

System **100**

Hardware Processor(s) **104**

I/O Interface(s) **106**

Memory **102**

Modules **108**

FIG. 1

FIG.2A

**FIG. 2B**

300

receiving by an electric vehicle (EV) charging aggregator having an RL agent, a user request comprising an EV charging demand request and a time of day to generate an EV charging price to maximize revenue of the EV charging aggregator

302

modelling using a state generator, a state of the RL agent for processing the user request and assigning a reward to the RL agent for the performed action

304

dynamically generating by the RL agent, the EV charging price for the user request to maximize revenue of the EV charging aggregator by, computing an actual demand pool $(P_1)$, a service pool (S), and a total number of currently available EV chargers $(K_t)$, a time of day $(t_d)$ of the user request

306

FIG.3

**FIG.4A**

FIG.4A

## Behaviour model: Private EVSE Suppliers

FIG.4B

FIG.4C

**Predicted Price**

FIG.4D

(a) Total Revenue | Average Case

**FIG.5A**

(b) Revenue per Charger | Average Case

**FIG.5B**

**Utilization | Single Zone ( Average Case )**

(c) Utilization | Average Case

**FIG.5C**

(d) Total Revenue | Peak Case

**FIG.5D**

(e) Revenue per Charger | Peak Case

**FIG.5E**

(f) Utilization | Peak Case

FIG.5F

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121033775

- KR 20190133567 A

**Non-patent literature cited in the description**

- **DIMITROV STOYAN et al.** *Reinforcement Learning Based Algorithm for the Maximization of EV Charging Station Revenue*

- **ABDULLAH HEBA M et al.** *Reinforcement Learning Based EV Charging Management Systems-A Review*